# EUROPEAN PATENT APPLICATION

(11) **EP 4 513 417 A1**
(43) Date of publication of application: **26.02.2025**
(21) Application number: 23791079.9
(22) Date of filing: 11.04.2023
(51) Int. Cl.: G06Q 30/06

(54) **PRODUCT INFORMATION PROCESSING METHOD AND APPARATUS, READABLE MEDIUM, AND ELECTRONIC DEVICE**

(30) Priority: 21.04.2022 CN 202210425350
(71) Applicant: BEIJING YOUZHUJU NETWORK TECHNOLOGY CO. LTD., Beijing 101299 (CN)
(72) Inventor: ZHOU, Jingyi, Beijing 100028 (CN); YANG, Yuhang, Beijing 100028 (CN); LIU, Yuhang, Beijing 100028 (CN); MA, Yixuan, Beijing 100028 (CN); JIA, Xun, Beijing 100028 (CN); WU, Yan, Beijing 100028 (CN); ZHANG, Cong, Beijing 100028 (CN); ZHANG, Haoran, Beijing 100028 (CN)
(74) Representative: Dentons UK and Middle East LLP
(86) International application number: PCT/CN2023/087550
(87) International publication number: WO 2023/202424

(57) **Abstract**

The disclosure relates to a commodity information processing method, apparatus, readable medium, electronic device, computer program product, and computer program. In the commodity information processing method, in response to receiving a target call request from a first user for a target commodity combination, adding to-be-added commodities in the target commodity combination into the commodity list of the live session based on commodity source categories, a first ranking order of the to-be-added commodities in the target commodity combination, and a second ranking order of existing commodities in the commodity list of the live session. The addition efficiency of adding a commodity to the live session before livestreaming can be effectively improved, thereby effectively shortening the time consumption of adding a commodity before livestreaming. In addition, the occupation of bandwidth resources and server resources can be reduced to a certain extent, thereby avoiding the reduction of the processing efficiency of the server caused by frequent commodity addition requests and operations.

## Description

### CROSS REFERENCE TO RELATED APPLICATIONS

This disclosure claims priority to Chinese Patent Application No. 202210425350.7, filed on April 21, 2022 and entitled "COMMODITY INFORMATION PROCESSING METHOD, APPARATUS, READABLE MEDIUM AND ELECTRONIC DEVICE", which is incorporated herein by reference in its entirety.

### FIELD

The present disclosure relates to the field of computer technologies, and in particular, to a commodity information processing method, apparatus, readable medium, electronic device, computer program product, and computer program.

### BACKGROUND

With the development of Internet, there are more and more manners for selling commodities via Internet. For example, live commerce is quite popular at present. Live commerce refers to a novel service manner using livestream technology to display commodities online, ask questions, and order and sell commodities. The amount of sale of commodities is driven through livestreaming via Internet.

Generally, before livestreaming, a commodity needs to be selected for the livestreaming. Then the selected commodity is added to a live session based on a live selling order before the livestreaming begins. After the commodity is added, a livestreaming button is clicked to sell the commodity for livestreaming. The current commodity addition process has the problems of low commodity addition efficiency and long time-consumption of the whole commodity addition process.

### SUMMARY

This Summary is provided to introduce the concepts in a simplified form that are further described below in the Detailed Description. This Summary is not intended to identify key features or essential features of the claimed subject matter, nor is it intended to be used to limit the scope of the claimed subject matter.

This disclosure provides a commodity information processing method, apparatus, readable medium, electronic device, computer program product, and computer program.

In a first aspect, the present disclosure provides a commodity information processing method. The method comprises:
in response to receiving a target call request from a first user for a target commodity combination, determining to-be-added commodities in the target commodity combination to be added to a commodity list of a live session, the target commodity combination comprising a commodity in a commodity pool corresponding to the first user and/or a commodity outside the commodity pool corresponding to the first user;
obtaining respective commodity source categories of the to-be-added commodities and a first ranking order of the to-be-added commodities in the target commodity combination, the commodity source categories representing sources of the to-be-added commodities;
obtaining a second ranking order of existing commodities in the commodity list of the live session; and
adding the to-be-added commodities into the commodity list of the live session based on the commodity source categories and the first and second ranking orders.

In a second aspect, the present disclosure provides a product information processing apparatus. The apparatus includes:
a first determination module configured to in response to receiving a target call request from a first user for a target commodity combination, determine to-be-added commodities in the target commodity combination, the to-be-added commodities to be added to a commodity list of a live session, the target commodity combination comprising a commodity in a commodity pool corresponding to the first user and/or a commodity outside the commodity pool corresponding to the first user;
a first obtaining module configured to obtain respective commodity source categories of the to-be-added commodities and a first ranking order of the to-be-added commodities in the target commodity combination, the commodity source categories representing sources of the to-be-added commodities;
a second obtaining module configured to obtain a second ranking order of existing commodities in the commodity list of the live session; and
a first addition module configured to add the to-be-added commodities into the commodity list of the live session based on the commodity source categories and the first and second ranking orders.

In a third aspect, the present disclosure provides a computer readable medium, a computer program is stored thereon, wherein when the program is executed by a processing device, the steps of the method according to the first aspect are implemented.

In a fourth aspect, the present disclosure provides an electronic device, including:
a storage device having a computer program stored thereon;
a processing device for executing the computer program in the storage device to implement the steps of the method of the first aspect.

In a fifth aspect, the present disclosure provides a computer program product, including a computer program, where the computer program is executed by a processing device to implement steps of the method according to the first aspect.

In a sixth aspect, an embodiment of the present disclosure provides a computer program, which when being executed by a processing device, implements steps of the method according to the first aspect.

Additional features and advantages of the disclosure will be set forth in the detailed description which follows.

### BRIEF DESCRIPTION OF THE DRAWINGS

The above and other features, advantages, and aspects of various embodiments of the present disclosure will become more apparent with reference to the following detailed description taken in conjunction with the accompanying drawings. Throughout the drawings, the same or like reference numerals denote the same or like elements. It is to be understood that the drawings are illustrative and that elements and elements may not be drawn to scale. In the drawings:
FIG. 1 is a flowchart of a commodity information processing method according to an embodiment of the present disclosure;
**FIG.** 2 is a flowchart of a commodity information processing method according to the embodiment shown in FIG. 1;
FIG. 3 is a flowchart of another commodity information processing method according to the embodiment shown in FIG. 1;
FIG. 4 is a flowchart of still another commodity information processing method according to the embodiment shown in FIG. 1;
FIG. 5 is a flowchart of still another commodity information processing method according to the embodiment shown in FIG. 1;
FIG. 6 is a block diagram of a commodity information processing apparatus illustrated in an embodiment of the present disclosure;
FIG. 7 is a block diagram of a commodity information processing apparatus shown in accordance with the embodiment shown in FIG. 6; and
FIG. 8 is a block diagram of an electronic device illustrated in an embodiment of the present disclosure.

### DETAILED DESCRIPTION

Embodiments of the present disclosure will be described in more detail with reference to the accompanying drawings, in which some embodiments of the present disclosure have been illustrated. However, it is to be understood that the present disclosure can be implemented in various manners, and thus should not be construed to be limited to embodiments disclosed herein. On the contrary, those embodiments are provided for the thorough and complete understanding of the present disclosure. It is to be understood that the drawings and embodiments of the present disclosure are merely for the purpose of illustration, rather than limiting the protection scope of the present disclosure.

It should be understood that, the steps recorded in the method embodiments of the present disclosure may be executed in different orders, and/or executed in parallel. Furthermore, method embodiments may include additional steps and/or omit the steps illustrated performing. The scope of the present disclosure is not limited in this respect.

As used herein, the term "includes" and its variants are to be read as open terms that mean "includes, but is not limited to." The term "based on" is to be read as "based at least in part on" The terms "one embodiment" or "the embodiment" are to be read as "at least one embodiment." The term "some embodiments" is to be read as "at least some embodiments" Relevant definitions of other terms will be given in the following description.

It should be noted that, the "first", "second", and other concepts mentioned in the present disclosure are only used to distinguish different apparatuses, modules, or units, but are not used to limit the sequence or dependency of functions performed by these apparatuses, modules, or units.

It should be noted that the modifications of "a" and "a plurality" mentioned in the present disclosure are illustrative rather than restrictive, and those skilled in the art should understand that they should be understood as "one or more" unless the context clearly indicates otherwise.

The names of messages or information interacted between a plurality of devices in embodiments of the present disclosure are only for illustrative purposes, and are not intended to limit the scope of these messages or information.

It should be understood that, before applying the technical solutions disclosed in various embodiments of the present disclosure, the user should be informed of the type, scope of use, and use scenario of the personal information involved in the subject matter described herein in an appropriate manner in accordance with relevant laws and regulations, and user authorization should be obtained.

For example, in response to receiving an active request from the user, prompt information is sent to the user to explicitly inform the user that the requested operation would acquire and use the user's personal information. Therefore, according to the prompt information, the user may decide on his/her own whether to provide the personal information to the software or hardware, such as electronic devices, applications, servers, or storage media that perform operations of the technical solutions of the subject matter described herein.

As an optional but non-limiting implementation, in response to receiving an active request from the user, the way of sending the prompt information to the user may, for example, include a pop-up window, and the prompt information may be presented in the form of text in the pop-up window. In addition, the pop-up window may also carry a select control for the user to choose to "agree" or "disagree" to provide the personal information to the electronic device.

It is to be understood that the above process of notifying and obtaining the user authorization is only illustrative and does not limit the implementations of the present disclosure. Other methods that satisfy relevant laws and regulations are also applicable to the implementations of the present disclosure.

At the same time, it should be understood that the data involved in the present technical solution (including but not limited to the data itself, the acquisition or use of the data) should comply with requirements of corresponding laws and regulations and relevant rules.

Before describing specific embodiments of the present disclosure in detail, the following descriptions are first made on application scenarios of the present disclosure. The present disclosure can be applied to a scenario where a live commerce is added to a live session before livestreaming is carried.

According to statistics, the number of authors (high-frequency authors) in a region with announcements greater than 10 (taking 21% of the total authors) is 1804, and 1302 of the authors (taking 72% of the high-frequency authors) have a fixed disk of goods (one disk of goods means that the repeated proportion of goods accounts for more than 75% in three continuous livestreaming). There are 548 (30% for high-frequency authors and 6% for total authors) live streamers of the live streamers with disk of goods having the amount of goods being greater than 10, with 495 (90% for 548) of them being merchants.

The above-mentioned data is enough to be seen, and a high repetition rate of live products of high-frequency authors is achieved. Moreover, according to the data of research and interview in practice, the average time consumption of adding 50 products before the authorship is performed is not less than 30 minutes, and the livestreaming of more than 50 products needs to be prepared for adding products in advance for about 1 hour. The inventor finds that the main reasons why adding commodities consumes a long time include that: it is difficult to locate commodities, there are many similar commodities, it is difficult to distinguish them, and the post-additive sorting efficiency is low. After the additive is reversely sorted into the product queue, the position needs to be manually adjusted to the designated sorting. This is especially difficult in the case that the App end does not support dragging sorting.

In order to overcome the above technical problems, the present disclosure provides a commodity information processing method, apparatus, readable medium, electronic device, computer program product, and computer program. The commodity information processing method comprises in response to a target call request from a first user for a target commodity combination, adding commodities to be added in the target commodity combination into the live commodity list based on a commodity source category, a first ranking order of the commodities to be added in the target commodity combination, and a second ranking order of existing commodities in the current live commodity list. The addition efficiency of adding a commodity to the live broadcast before live broadcast can be effectively improved, thereby effectively shortening the time consumption of adding commodities before livestreaming. In addition, the occupation of bandwidth resources and server resources can be reduced to a certain extent, and frequent commodity addition requests and operations are prevented from occupying resources for a long time, thereby avoiding the reduction of the processing efficiency of the server.

The technical solutions of the present disclosure will be described in detail below in conjunction with specific embodiments.

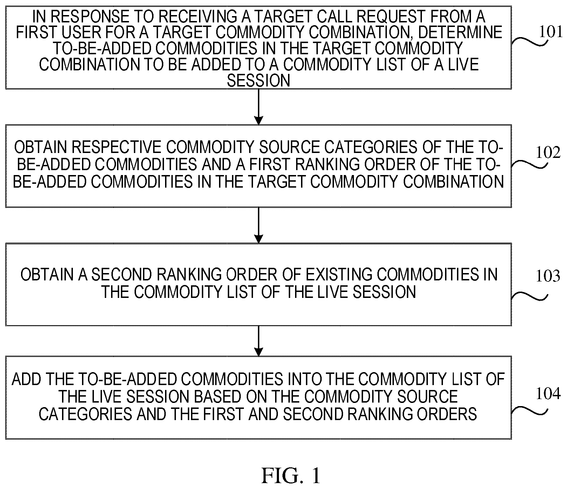

FIG. 1 is a flowchart of a commodity information processing method according to an exemplary embodiment of the present disclosure, As shown in FIG. 1, the method may include:
Step 101: in response to receiving a target call request from a first user for a target commodity combination, to-be-added commodities in the target commodity combination to be added to a commodity list of a live session are determined.

The target commodity combination comprises a commodity in a commodity pool corresponding to the first user and/or a commodity outside the commodity pool corresponding to the first user.

It should be noted that the target call request may be triggered by clicking a link address corresponding to the target commodity combination, a preset button, or a combination identifier. The commodity list of the live session may be a commodity list in a shopping bag of the live session. The commodities in the commodity pool corresponding to the first user may be shop window commodities of the first user, and the commodities outside the commodity pool corresponding to the first user may be shop window commodities of users other than the first user, commodities in a platform, or commodities of third party merchants.

Step 102: respective commodity source categories of the to-be-added commodities and a first ranking order of the to-be-added commodities in the target commodity combination are obtained.

The commodity source category is used to represent a source of a commodity. For example, the commodity source category may include a platform carrier, a multi-party union commodity, and a third-party business commodity. The multi-party union commodity may be a union between a platform and a manufacturer, and may also be a union between a platform, a manufacturer, and a multi-party sales representative. The commodities in the target commodity combination are all arranged according to a pre-set sequence.

Step 103: a second ranking order of existing commodities in the commodity list of the live session is obtained.

The existing commodities of the commodity list of the live session may be arranged based on a time sequence of them being added into the commodity list of the live session, or may be arranged based on a sequence specified by the first user, for example, may be arranged based on a time sequence. Then in the case where an order adjustment instruction for some of the commodities is received, adjusting the positions of some of the commodities based on the order adjustment instruction, so as to obtain the second ranking order.

Step 104: the to-be-added commodities are added into the commodity list of the live session based on the commodity source categories and the first and second ranking orders.

In this step, respective first order attribute values of the to-be-added commodities are determined based on the first ranking order and the respective commodity source categories of the to-be-added commodities. Respective target orders of the to-be-added commodities in the commodity list of the live session are determined based on the respective first order attribute values of the to-be-added commodities and the second ranking order of the existing commodities in the commodity list of the live session. The to-be-added commodities are added into the commodity list of the live session based on the respective target orders of the to-be-added commodities in the commodity list of the live session.

In this step, the commodities to be added in the target commodity combination may also be arranged before the existing commodities in the second ranking order or after the existing commodities in the second ranking order based on the first ranking order, to obtain an intermediate list. Then commodities of a target commodity source category are selected and arranged at the head end or tail end of the intermediate list, so as to obtain a commodity list after the commodity to be added is added to the intermediate commodity list of the live session.

According to the technical solution, by receiving a target call request for a target commodity combination from a first user, based on a commodity source category, a first ranking order of the commodities to be added in the target commodity combination and a second ranking order of existing commodities in a current commodity list of the live session, the commodities to be added are added to the commodity list of the live session The efficiency of adding commodities to live session before livestreaming can be effectively improved. In addition, the occupation of bandwidth resources and server resources can be reduced to a certain extent, and frequent commodity addition requests and long-time commodity addition operations are avoided, thereby avoiding the reduction of the processing efficiency of the server.

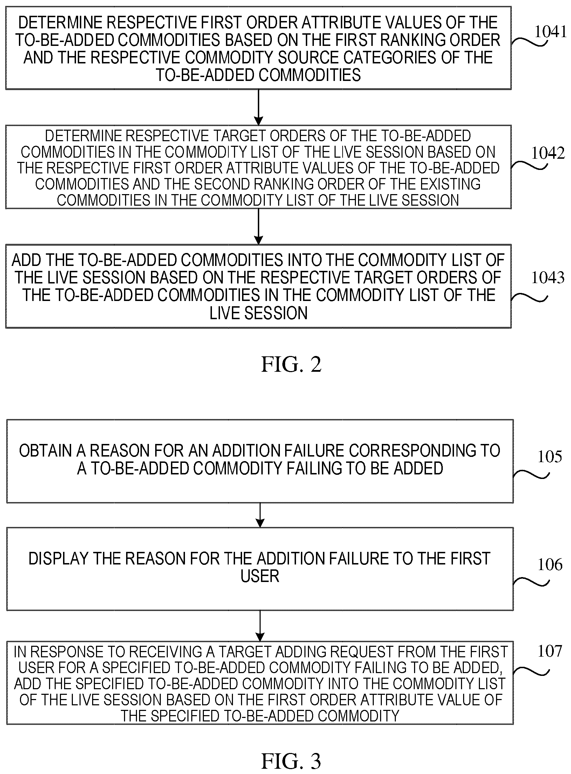

FIG. 2 is a flowchart of a commodity information processing method according to the embodiment shown in FIG. 1. As shown in FIG. 2, the adding the commodities to be added to the commodity list of the live session based on the source categories of the commodities, the first ranking order, and the second ranking order in Step 104 in FIG. 1 may include:
Step 1041: respective first order attribute values of the to-be-added commodities are determined based on the first ranking order and the respective commodity source categories of the to-be-added commodities .

In this step, first time information of a reception of the target call request may be acquired. Respective preset time-consuming duration corresponding to each commodity source category may be obtained. Then, for each of the to-be-added commodities, the respective first order attribute value is determined based on the first time information, the respective pre-set consuming time duration of the to-be-added commodity and a respective position of the to-be-added commodity in the first ranking order.

The first time information may be a timestamp of the target call request. Because different commodity source categories may have different processes of being added into the list of the commodities of the live session, preset time consumption durations corresponding to the different commodity source categories may be different. For example, if a platform commodity product is added to a commodity list of the live session, it is not necessary to check the selling qualification of a live streamer (namely, a first user), and therefore the adding process needs a slightly shorter time consumption. The multi-party alliance commodities, if being added to the commodity list of the live session, it needs to check the selling qualification of the live streamer. Therefore, a slightly long pre-set time-consuming duration may be set for the multi-party alliance commodities.

By way of example, the time corresponding to the timestamp of the target call request is 13 hour, 56 minutes, 23 seconds, and 225 milliseconds in February 11, 2022. The timestamp may be used as a base score (basic order attribute value) of the target commodity combination. If the preset time consumption duration corresponding to the platform commodity is 20 ms, the pre-set time-consuming duration corresponding to the multi-party union commodity is 30 ms, and the pre-set time-consuming duration corresponding to the third-party merchant commodity is 25 ms, and if the target commodity combination includes commodity 1, commodity 2 to commodity 50, and commodity 1 to commodity 20 are platform commodities, commodity 21 to commodity 25 and commodity 30 to commodity 39 are multi-party alliance commodities, and commodity 26 to commodity 29 and commodity 40 to commodity 50 are third-party merchant commodities, then, the first order attribute value that corresponds to each commodity may be obtained through calculation by using the following formula: score = time corresponding to base score+ (A-1)×20ms + B×30ms + C×25ms, where A is the number of the platform commodities before the current commodity (including the current commodity), B is the number of the multi-party union commodities before the current commodity, and C is the number of third party merchant commodity before the current commodity, score is a first order attribute value of the current commodity, and the base score is the base order attribute value of the target commodity combination of the current commodity.

For example, the first order attribute value corresponding to the commodity 1 may be the timestamp (accurate to the millisecond level), and the first order attribute value corresponding to the commodity 2 may be a timestamp value corresponding to time obtained by adding 20 ms to time corresponding to the timestamp (13 hour, 56 minutes, 23 seconds, and 225 milliseconds in February 11, 2022) and time obtained by adding 20 ms to time corresponding to the timestamp (13 hour, 56 minutes, 23 seconds, and 225 milliseconds + 20 milliseconds in February 11, 2022). The first order attribute value corresponding to the commodity 3 may be a timestamp value corresponding to time obtained by adding 2 × 20 ms to time corresponding to the timestamp. The first order attribute value corresponding to the commodity 20 may be a timestamp value corresponding to time obtained by adding 19 × 20 ms to the time corresponding to the timestamp. The first order attribute value corresponding to the commodity 21 may be a timestamp value corresponding to time obtained by adding 19 × 20 ms + 30 ms to the time corresponding to the timestamp. The first order attribute value corresponding to the commodity 25 may be a timestamp value corresponding to time obtained by adding 19 × 20 ms + 5 × 30 ms to the time corresponding to the timestamp. The first order attribute value corresponding to the commodity 26 may be a timestamp value corresponding to time obtained by adding 19 × 20 ms + 5 × 30 ms + 25 ms to the time corresponding to the timestamp. The first order attribute value corresponding to the commodity 30 may be a timestamp value corresponding to time obtained by adding 19x20ms+5x30ms+4x25ms+30ms to the time corresponding to the timestamp. The first order attribute value corresponding to the commodity 40 may be a timestamp value corresponding to the time obtained by adding the time corresponding to the timestamp to 19×20ms+5×30ms+4×25ms+10×30ms+25ms. The first order attribute value corresponding to the commodity 50 may be a timestamp value corresponding to time obtained by adding 19×20ms+5×30ms+4×25ms+10×30ms+1×25ms to the time corresponding to the timestamp.

Step 1042: respective target orders of the to-be-added commodities in the commodity list of the live session are determined based on the respective first order attribute values of the to-be-added commodities and the second ranking order of the existing commodities in the commodity list of the live session.

In this step, second order attribute values of the existing commodities in the second ranking order may be acquired. Respective orders of the to-be-added commodities in the commodity list of the live session are determined based on the first order attribute values of the to-be-added commodities and the second order attribute values of the existing commodities.

The second order attribute value may be a timestamp when a corresponding commodity is added to the list of commodities of the live session. In this step, the target order may be determined based on a sequence of timestamps corresponding to existing commodities and the to-be-added commodity. For example, a sequence of timestamps from small to large (or a sequence from big to small) may be used as the target order.

Step 1043: the to-be-added commodities are added into the commodity list of the live session based on the respective target orders of the to-be-added commodities in the commodity list of the live session.

In this step, the livestream authority of each to-be-added commodity of the first user may be checked in sequence based on the target order of each to-be-added commodity in the commodity list of the live session. If the checking of the livestream authority for a to-be-added commodity is passed, the to-be-added commodity is added into the commodity list of the live session.

It should be noted that, for a specific implementation process of checking the livestream authority of each commodity to be added for the first user, reference may be made to a checking manner in the prior art, and the present disclosure sets no limitation thereto.

The above technical solution can effectively add a commodity to be added into a commodity list of the live session, and sequence the commodity to be added and existing commodities, can effectively shorten the sequencing time of the commodities in the commodity list of the live session, and can improve the generation efficiency of the commodity list of the live session required for generating livesteaming. In addition, the occupation of bandwidth resources and server resources can be reduced to some extent, and the processing efficiency of the server is prevented from being reduced due to frequent and long-time commodity addition operations.

FIG. 3 is a flowchart of another commodity information processing method according to the embodiment shown in FIG. 1. As shown in FIG. 3, after Step 104 in FIG. 1, the method may further include:
Step 105: a reason for an addition failure corresponding to a to-be-added commodity failing to be added is obtained.

The adding failure reason may be that the first user does not have a sale right for the to-be-added commodity, may also be that a network connection is interrupted, and may also be that the stock of the commodity is insufficient.

Step 106: the reason for the addition failure to the first user is displayed.

In this step, the reason for the addition failure may be presented in the form of a pop-up window of the live session.

Step 107, in response to receiving a target adding request from the first user for a specified to-be-added commodity failing to be added, the specified to-be-added commodity is added into the commodity list of the live session based on the first order attribute value of the specified to-be-added commodity.

After receiving the adding failure reason, the first user may trigger the target adding request if determining that the network connection is normal for a commodity to be added whose network connection is interrupted. For a commodity to which the commodity to be added does not have a sales right, the target addition request may be triggered in a case in which it is determined that the commodity has the right for sales. After the target adding request for the specified commodity to be added is received, if the specified commodity to be added is added for the first time, the first order attribute value of the specified commodity to be added determines the ordering of the specified commodity to be added in the commodity list of the live session.

By means of the technical solution, a designated commodity to be added which fails to be added can be added to a commodity list of the live session based on the first order attribute value corresponding to the designated commodity to be added, so that it can be ensured that the designated commodity to be added is added to the commodity list of the live session based on a sequence of target commodity combinations. The addition efficiency of live commence commodities can be effectively improved. This also makes it possible to avoid that frequent and long-time commodity addition operations cause a decrease in processing efficiency of the server.

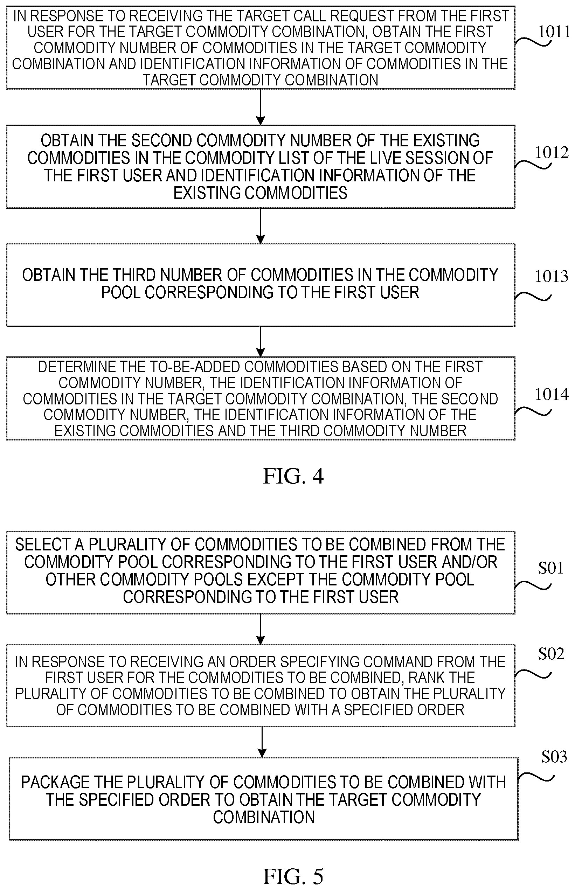

FIG. 4 is a flowchart of still another commodity information processing method according to the embodiment shown in FIG. 1. As shown in FIG. 4, in response to receiving a target call request from a first user for a target commodity combination as described in step 101 in FIG. 1, the determining to-be-added commodities in the target commodity combination to be added to the commodity list of the live session may be implemented through the following steps:
Step 1011: in response to receiving the target call request from the first user for the target commodity combination, the first commodity number of commodities in the target commodity combination and identification information of commodities in the target commodity combination are obtained.

The identification information may be a commodity ID, a commodity name, or a commodity code.

At Step 1012, the second commodity number of the existing commodities in the commodity list of the live session of the first user and identification information of the existing commodities are obtained.

Step 1013: the third number of commodities in the commodity pool corresponding to the first user is obtained.

The commodities in the commodity pool corresponding to the first user may be the shop window commodities of the first user, and the third number of commodities may be the number of the shop window commodities.

Step 1014: the to-be-added commodities are determined based on the first commodity number, the identification information of commodities in the target commodity combination, the second commodity number, the identification information of the existing commodities and the third commodity number

This step may be implemented through the contents described in S1 to S4:
S1, a first commodity number upper limit corresponding to the commodity list of the live session and a second commodity number upper limit of the commodity pool corresponding to the first user are obtained.
S2, in case that a target sum value of the first and second commodity numbers is less than or equal to the first commodity number upper limit and a specified sum value of the first and third commodity numbers is less than or equal to the second commodity number upper limit, target commodities in the target commodity combination except the existing commodities is determined based on the identification information of commodities in the target commodity list and the identification information of the existing commodities.

It should be noted that, if a commodity to be added is added to the commodity list of the live session, if the commodity to be added does not belong to a commodity in the commodity pool corresponding to the first user, the commodity to be added needs to be added to the commodity pool corresponding to the first user first, and then the added commodity may be added to the commodity list of the live session. Therefore, it is necessary to check whether a target sum value is less than or equal to the first commodity number upper limit, and whether the specified target sum value is less than or equal to the second commodity number upper limit. Only if the target sum of the first and second commodity numbers is less than or equal to the first commodity number upper limit, and in case where the specified sum value of the first and third commodity numbers is less than or equal to the second commodity number upper limit, it can be ensured that a commodity to be added can be added not only to the list of commodities of the live session, but also to the commodity pool corresponding to the first user.

S3, the to-be-added commodities from the target commodities are determined.

All or some of the target commodities may be used as commodities to be added.

S4, if it is determined that the target sum value is larger than the first commodity number upper limit or the specified sum value is larger than the second commodity number upper limit, pre-set upper limit prompt information is outputted.

The preset upper limit prompt information is used to prompt the first user that a target sum value of the first and second commodity numbers exceeds the first upper limit of the commodity number, or a specified sum value of the first and third commodity numbers exceeds the second upper limit of the commodity number.

By means of the technical solution, the commodity to be added can be determined based on the first commodity number, identification information about each commodity in the target commodity combination, the second commodity number, identification information about the existing commodities, and the third commodity number, so that repeated addition of the same commodity can be effectively avoided, thereby being beneficial to improving the addition efficiency of live commodities effectively. This also makes it possible to avoid that frequent and long-time commodity addition operations cause a decrease in processing efficiency of the server.

FIG. 5 is a flowchart of still another commodity information processing method according to the embodiment shown in FIG. 1. As shown in FIG. 5, before step 101 in FIG. 1, one or more target commodity combinations may be pre-generated by means of the methods shown in S01 to S03, and the plurality of target commodity combinations are stored in a pre-set database for calling. The target commodity combination is obtained by means of the following steps:
In step S01, a plurality of commodities to be combined are selected from the commodity pool corresponding to the first user and/or other commodity pools except the commodity pool corresponding to the first user.

The other commodity pools may be commodity pools of other users except the first user, may also be public commodity pools in the platform, and may also be commodity pools of third-party merchants.

**Step** S02, in response to receiving an order specifying command from the first user for the commodities to be combined, the plurality of commodities to be combined is ranked to obtain the plurality of commodities to be combined with a specified order .

In this step, the order specifying command for the commodities to be combined may be triggered by dragging the commodities to be combined. For example, if the commodity 1 is the first one of the plurality of commodities to be combined, the commodity M may be dragged to the upper part of the commodity 1, so that the order of the commodity M is set to be the first one of the plurality of commodities to be combined, and the commodity 1 becomes the second one.

It should be noted that, if a plurality of to-be-combined commodities are sequenced, a batch operation may be performed on some to-be-combined commodities among the plurality of to-be-combined commodities. For example, three to-be-combined commodities are selected, and the three to-be-combined commodities are dragged to a position above a commodity 1, so as to adjust an order of the three to-be-combined commodities to a position before the commodity 1. A batch deletion operation may also be performed on a plurality of commodities to be combined, and a certain commodity combination may also be used as the commodities to be combined to generate the target commodity combination.

step S03, the plurality of commodities to be combined with the specified order is packaged to obtain the target commodity combination.

In this step, an association relationship among the plurality of commodities to be combined may be established, so that the plurality of commodities to be combined are packaged, wherein each of the commodities to be combined has attribute data of a sequential position in the combination.

Through the above S01 to S03, a target commodity combination with a designated order can be effectively generated.

Alternatively, after packaging the plurality of commodities to be combined with the specified order, specified identification information of the target commodity combination corresponding to the plurality of commodities to be combined is generated.

The specified identification information may be a link, and the link is also referred to as a hyperlink, which refers to a connection relationship pointing from one webpage to a target. The target pointed to may be another webpage, may also be different positions on the same webpage, and may also be a picture, an email address, a file, and even an application program. The specified identification information may also be a preset identification button.

It should be noted that, after the designated identification is generated, the designated identification information may be sent to the second user, so that the second user triggers the call request for the target commodity combination by clicking the designated identification information.

The above technical solution can provide convenience for realizing the use of a target commodity combination by a plurality of users, thereby being beneficial to improving the utilization rate of the target commodity combination, and also being able to more effectively improve the work efficiency of adding commodities to a plurality of live sessions of a merchant, and can effectively shorten the time consumption of adding commodities, thereby being beneficial to improving the user experience. In addition, the occupation of bandwidth resources and server resources can be reduced to a certain extent, and frequent commodity addition requests and long-time commodity addition operations are avoided, thereby avoiding the reduction of the processing efficiency of the server.

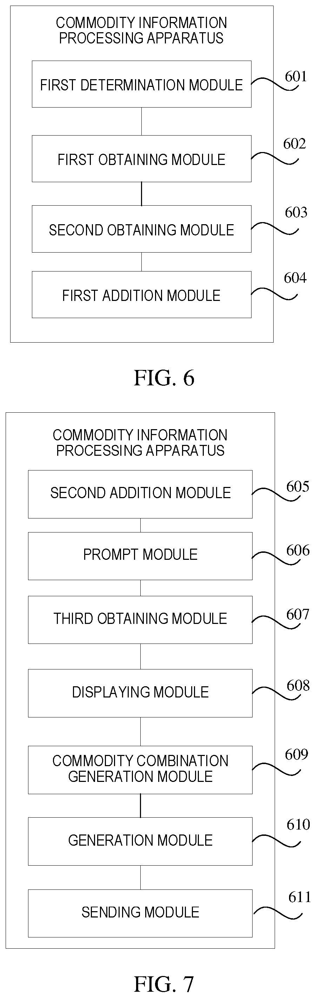

**FIG.** 6 is a block diagram of a commodity information processing apparatus according to an example embodiment of the present disclosure. As shown in FIG. 6, the commodity information processing apparatus may include:
a first determination module 601 configured to in response to receiving a target call request from a first user for a target commodity combination, determine to-be-added commodities in the target commodity combination, the to-be-added commodities to be added to a commodity list of a live session, the target commodity combination comprising a commodity in a commodity pool corresponding to the first user and/or a commodity outside the commodity pool corresponding to the first user;
a first obtaining module 602 configured to obtain respective commodity source categories of the to-be-added commodities and a first ranking order of the to-be-added commodities in the target commodity combination, the commodity source categories representing sources of the to-be-added commodities;
a second obtaining module 603 configured to obtain a second ranking order of existing commodities in the commodity list of the live session; and
a first addition module 604 configured to add the to-be-added commodities into the commodity list of the live session based on the commodity source categories and the first and second ranking orders.

According to the technical solution, by receiving a target call request for a target commodity combination from a first user, adding the commodity to be added into the commodity list of the live session based on the commodity source category, a first ranking order of the commodities to be added in the target commodity combination, and a second ranking order of existing commodities in the current commodity list of the live session. The efficiency of adding commodities to live session before livestreaming can be effectively improved.

Optionally, the first addition module 604 is configured to:
determine respective first order attribute values of the to-be-added commodities based on the first ranking order and the respective commodity source categories of the to-be-added commodities;
determine respective target orders of the to-be-added commodities in the commodity list of the live session based on the respective first order attribute values of the to-be-added commodities and the second ranking order of the existing commodities in the commodity list of the live session; and
add the to-be-added commodities into the commodity list of the live session based on the respective target orders of the to-be-added commodities in the commodity list of the live session.

Optionally, the first addition module 604 is configured to:
obtain first time information of a reception of the target call request;
obtain respective pre-set consuming time durations of the commodity source categories; and
determine, for each of the to-be-added commodities, the respective first order attribute value based on the first time information, the respective pre-set consuming time duration of the to-be-added commodity and a respective position of the to-be-added commodity in the first ranking order.

Optionally, the first addition module 604 is configured to:
obtain second order attribute values of the existing commodities in the second ranking order; and
determine respective orders of the to-be-added commodities in the commodity list of the live session based on the first order attribute values of the to-be-added commodities and the second order attribute values of the existing commodities.

Optionally, the first addition module 604 is configured to:
sequentially check respective livestream authority of the first user for the to-be-added commodities based on the respective target orders of the to-be added commodities in the commodity list of the live session; and
in accordance with a determination that the checking of the livestream authority for a to-be-added commodity is passed, add the to-be-added commodity into the commodity list of the live session.

The above technical solution can effectively add a commodity to be added into a commodity list of a live session. Ordering the commodity to be added and existing commodities, can effectively shorten the sequencing time of the commodities in the commodity list of the live session, and can improve the generation efficiency of the commodity list of the live session required for generating livestreaming. In addition, the occupation of bandwidth resources and server resources can be reduced to a certain extent, and frequent commodity addition requests and long-time commodity addition operations are avoided, thereby avoiding the reduction of the processing efficiency of the server.

FIG. 7 is a block diagram of a commodity information processing apparatus according to the embodiment shown in FIG. 6. As shown in FIG. 7, the apparatus further includes:
a second addition module 605 configured to in response to receiving a target adding request from the first user for a specified to-be-added commodity failing to be added, add the specified to-be-added commodity into the commodity list of the live session based on the first order attribute value of the specified to-be-added commodity.

Optionally, the first determination module 601 is specifically configured to:
in response to receiving the target call request from the first user for the target commodity combination, obtain the first commodity number of commodities in the target commodity combination and identification information of commodities in the target commodity combination;
obtain the second commodity number of the existing commodities in the commodity list of the live session of the first user and identification information of the existing commodities;
obtain the third number of commodities in the commodity pool corresponding to the first user; and
determine the to-be-added commodities based on the first commodity number, the identification information of commodities in the target commodity combination, the second commodity number, the identification information of the existing commodities and the third commodity number.

Optionally, the first determination module 601 is specifically configured to:
obtain a first commodity number upper limit corresponding to the commodity list of the live session and a second commodity number upper limit of the commodity pool corresponding to the first user;
in response to a target sum value of the first and second commodity numbers being less than or equal to the first commodity number upper limit and a specified sum value of the first and third commodity numbers being less than or equal to the second commodity number upper limit, determine target commodities in the target commodity combination except the existing commodities based on the identification information of commodities in the target commodity list and the identification information of the existing commodities; and
determine the to-be-added commodities from the target commodities.

Optionally, the apparatus further comprises:
a prompt module 606 configured to in accordance with a determination that the target sum value is larger than the first commodity number upper limit or the specified sum value is larger than the second commodity number upper limit, output pre-set upper limit prompt information.

Optionally, the apparatus further comprises:
a third obtaining module 607 configured to obtain a reason for an addition failure corresponding to a to-be-added commodity failing to be added; and
a displaying module 608 configured to display the reason for the addition failure to the first user.

Optionally, the apparatus further comprises a commodity combination generation module 609 configured to:
select a plurality of commodities to be combined from the commodity pool corresponding to the first user and/or other commodity pools except the commodity pool corresponding to the first user;
in response to receiving an order specifying command from the first user for the commodities to be combined, rank the plurality of commodities to be combined to obtain the plurality of commodities to be combined with a specified order; and
package the plurality of commodities to be combined with the specified order to obtain the target commodity combination.

Optionally, the apparatus further comprises:
a generation module 610 configured to after packaging the plurality of commodities to be combined with the specified order, generate specified identification information of the target commodity combination corresponding to the plurality of commodities to be combined.

Optionally, the apparatus further comprises:
a sending module 611 configured to send the specified identification information to a second user, to cause the second user to trigger the call request for the target commodity combination by clicking the specified identification information.

The above technical solution can provide convenience for realizing the use of a target commodity combination by a plurality of users, thereby being beneficial to improving the utilization rate of the target commodity combination, and also being able to more effectively improve the work efficiency of adding commodities to a plurality of live sessions of a merchant, and can effectively shorten the time consumption of adding products, thereby being beneficial to improving the user experience. In addition, the occupation of bandwidth resources and server resources can be reduced to a certain extent, and frequent commodity addition requests and long-time commodity addition operations are avoided, thereby avoiding the reduction of the processing efficiency of the server.

With respect to the apparatus in the foregoing embodiments, the specific manner in which the modules execute the operations has been described in detail in the embodiments of the method, and is not described in detail herein.

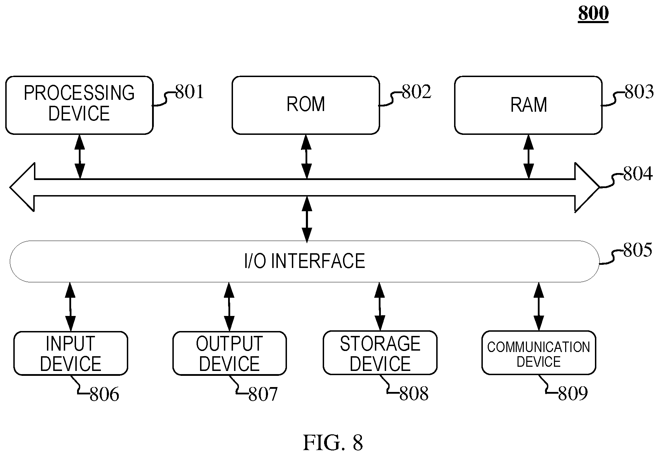

Referring to FIG. 8, it shows a schematic structural diagram of an electronic device 800 suitable for implementing an embodiment of the present disclosure. The electronic device 800 may be a terminal device or a server. The terminal device may include, but is not limited to, mobile terminals such as a mobile phone, a notebook computer, a digital broadcast receiver, a personal digital assistant (PDA), a PAD (tablet computer), a portable media player (PMP) and a vehicle-mounted terminal (for example, a vehicle-mounted navigation terminal), and fixed terminals such as a digital television (TV) and a desktop computer. The electronic device shown in FIG. 8 is merely an example, and should not impose any limitation to the function or the scope of application of the embodiments of the present disclosure.

As shown in FIG. 8, electronic device 800 may include a processing device (such as a central processing unit and a graphics processor) 801, which may execute various appropriate actions and processing according to a program stored in a read-only memory (ROM) 802 or a program loaded to a random access memory (RAM) 803 from a storage device 808. Various programs and data required during operation of the electronic device 800 are also stored in the RAM 803. The processing device 801, the ROM 802 and the RAM 803 are connected with one another via a bus 804. An input/output (I/O) interface 805 is also connected to the bus 804.

Generally, the following apparatuses may be connected to the I/O interface 805: an input device 806 including for example a touch screen, a touch pad, a keyboard, a mouse, a camera, a microphone, an accelerometer and a gyroscope; an output device 807 including for example a liquid crystal display (LCD), a speaker and a vibrator; a storage device 808 including for example a magnetic tape and a hard disk; and a communication device 809. The communication device 809 may allow wireless or wired communication between the electronic device 800 and other devices for data exchange. Although FIG. 8 shows the electronic device 800 having various devices, it should be understood that not all the devices shown are necessarily required to be implemented or provided. More or fewer devices may alternatively be implemented or provided.

In particular, according to the embodiments of the present disclosure, the process described above with reference to the flowcharts may be implemented as a computer software program. For example, an embodiment of the present disclosure provides a computer program product including a computer program carried on a non-transient computer-readable medium. The computer program includes a program code for executing the methods shown in the flowcharts. In such an embodiment, the computer program may be downloaded and installed from the network via the communication device 809, or installed from the storage device 808, or installed from the ROM 802. The computer program, when executed by the processing unit 801, causes the processing unit to execute the above functions defined in the methods according to the embodiments of the present disclosure.

It should be noted that the computer-readable medium according to the present disclosure may be a computer-readable signal medium or a computer-readable storage medium or any combination of the two. The computer-readable storage medium may be, for example, but is not limited to, an electrical, magnetic, optical, electromagnetic, infrared, or semiconductor system, apparatus, or device, or any combination thereof. More specific examples of the computer-readable storage medium include but are not limited to: an electrical connection with at least one wire, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In the present disclosure, the computer-readable storage medium may be any tangible medium that contains or stores a program. The program may be used by or used in combination with an instruction execution system, apparatus, or device. However, in the present disclosure, the computer-readable signal medium may include a data signal propagated in baseband or as a part of a carrier wave, and computer-readable program code is carried therein. This propagated data signal may take many forms, including but not limited to electromagnetic signals, optical signals, or any suitable combination thereof. The computer-readable signal medium may also be any computer-readable medium other than the computer-readable storage medium. The computer-readable signal medium may send, propagate, or transmit the program used by or used in combination with the instruction execution system, apparatus, or device. The program code contained on the computer-readable medium may be transmitted by any suitable medium, including but not limited to, wire, optical cable, RF, etc., or any suitable combination thereof.

The computer-readable medium may be included in the electronic device described above; or it may stand alone without being assembled into the electronic device.

In some embodiments, clients, servers can communicate using any currently known or future developed network protocol such as HTTP (Hypertext Transfer Protocol) and can be interconnected with digital data communication (e. g., a communication network) in any form or medium. Examples of communication networks include a local area network ("LAN"), a wide area network ("WAN"), an internetwork (e. g., the Internet), and a peer-to-peer network (e. g., an ad hoc peer-to-peer network), as well as any currently known or future developed network.

The computer readable medium may be included in the electronic device, or may exist separately and not be installed in the electronic device.

The computer readable medium carries one or more programs, and when the one or more programs are executed by the electronic device, the electronic device is enabled to:
in response to receiving a target call request from a first user for a target commodity combination, determine to-be-added commodities in the target commodity combination to be added to a commodity list of a live session, the target commodity combination comprising a commodity in a commodity pool corresponding to the first user and/or a commodity outside the commodity pool corresponding to the first user; obtain respective commodity source categories of the to-be-added commodities and a first ranking order of the to-be-added commodities in the target commodity combination, the commodity source categories representing sources of the to-be-added commodities; obtain a second ranking order of existing commodities in the commodity list of the live session; and add the to-be-added commodities into the commodity list of the live session based on the commodity source categories and the first and second ranking orders.

Embodiments of the present disclosure also provide a computer program comprising a computer program that when executed by a processing apparatus is the processing apparatus to perform the above-described functions defined in the method of embodiments of the present disclosure.

The computer program code for performing the operations of the present disclosure may be written in one or more programming languages or a combination thereof, which include but are not limited to object-oriented programming languages Java, Smalltalk, C++, and conventional procedural programming languages such as "C" or similar programming languages. The program codes may be executed completely on a user computer, partially on a user computer, as an independent package, partially on a user computer and partially on a remote computer, or completely on a remote computer or server. In cases involving a remote computer, the remote computer may be connected to a user computer through any type of network, including a local area network (LAN) or a wide area network (WAN), or may be connected to an external computer (for example, through the Internet by using an Internet service provider).

The flowcharts and the block diagrams in the drawings illustrate system architectures, functions and operations that may be implemented based on the system, method and computer program product according to various embodiments of the present disclosure. In this regard, each block in the flowcharts or the block diagrams can represent one module, a program segment or a part of a code, and the module, the program segment or the part of the code includes at least one executable instruction for implementing specific logic functions. It should also be noted that, in some alternative implementations, the functions noted in the blocks may also occur in a sequence different from those illustrated in the drawings. For example, two consecutive blocks may be executed substantially in parallel, and may sometimes be executed in an opposite order, depending on the functions involved. It should also be noted that each block in the block diagrams and/or the flowcharts, and combinations of the blocks in the block diagrams and/or the flowcharts can be implemented in a dedicated hardware-based system that performs the specified functions or operations, or can be implemented by the combination of dedicated hardware and computer instructions.

The modules described in the embodiments of the present disclosure may be implemented by way of software or hardware. In some cases, the names of the modules do not constitute limitations to the modules themselves. For example, the associated page displaying module may also be described as "a module that displays an associated page of a first user in a predetermined application, where the associated page includes an object identifier corresponding to at least one object, the first user is an author of the at least one object, and the object is used for creating a multimedia content".

The functions described above herein may be at least partially performed by one or more hardware logic components. For example, non-restrictively, example types of hardware logic components that may be used include: a field programmable gate array (FPGA), an application-specific integrated circuit (ASIC), an application-specific standard parts (ASSP), a system-on-chip (SOC), a complex programmable logic device (CPLD), and the like.

In the context of the present disclosure, the machine-readable medium may be a tangible medium that may contain or store a program used by or used in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination thereof.

According to one or more embodiments of the present disclosure, Example 1 provides a commodity information processing method, comprises:
in response to receiving a target call request from a first user for a target commodity combination, determining to-be-added commodities in the target commodity combination to be added to a commodity list of a live session, the target commodity combination comprising a commodity in a commodity pool corresponding to the first user and/or a commodity outside the commodity pool corresponding to the first user;
obtaining respective commodity source categories of the to-be-added commodities and a first ranking order of the to-be-added commodities in the target commodity combination, the commodity source categories representing sources of the to-be-added commodities;
obtaining a second ranking order of existing commodities in the commodity list of the live session; and
adding the to-be-added commodities into the commodity list of the live session based on the commodity source categories and the first and second ranking orders.

According to one or more embodiments of the present disclosure, Example 2 provides a method of Example 1, the adding the to-be-added commodities into the commodity list of the live session based on the commodity source categories and the first and second ranking orders comprises:
determining respective first order attribute values of the to-be-added commodities based on the first ranking order and the respective commodity source categories of the to-be-added commodities;
determining respective target orders of the to-be-added commodities in the commodity list of the live session based on the respective first order attribute values of the to-be-added commodities and the second ranking order of the existing commodities in the commodity list of the live session; and
adding the to-be-added commodities into the commodity list of the live session based on the respective target orders of the to-be-added commodities in the commodity list of the live session.

According to one or more embodiments of the present disclosure, Example 3 provides a method of Example 2, the determining respective first order attribute values of the to-be-added commodities based on the first ranking order and the respective commodity source categories of the to-be-added commodities comprises:
obtaining first time information of a reception of the target call request;
obtaining respective pre-set consuming time durations of the commodity source categories; and
determining, for each of the to-be-added commodities, the respective first order attribute value based on the first time information, the respective pre-set consuming time duration of the to-be-added commodity and a respective position of the to-be-added commodity in the first ranking order.

According to one or more embodiments of the present disclosure, Example 4 provides a method of Example 2, the determining respective target orders of the to-be-added commodities in the commodity list of the live session based on the respective first order attribute values of the to-be-added commodities and the second ranking order of the existing commodities in the commodity list of the live session comprises:
obtaining second order attribute values of the existing commodities in the second ranking order; and
determining respective orders of the to-be-added commodities in the commodity list of the live session based on the first order attribute values of the to-be-added commodities and the second order attribute values of the existing commodities.

According to one or more embodiments of the present disclosure, Example 5 provides a method of Example 2, the adding the to-be-added commodities into the commodity list of the live session based on the respective target orders of the to-be-added commodities in the commodity list of the live session comprises:
sequentially checking respective livestream authority of the first user for the to-be-added commodities based on the respective target orders of the to-be added commodities in the commodity list of the live session; and
in accordance with a determination that the checking of the livestream authority for a to-be-added commodity is passed, adding the to-be-added commodity into the commodity list of the live session.

According to one or more embodiments of the present disclosure, Example 6 provides a method of Example 2, the method further comprising:
in response to receiving a target adding request from the first user for a specified to-be-added commodity failing to be added, adding the specified to-be-added commodity into the commodity list of the live session based on the first order attribute value of the specified to-be-added commodity.

According to one or more embodiments of the present disclosure, Example 7 provides a method of Example 1, the in response to receiving a target call request from a first user for a target commodity combination, determining to-be-added commodities in the target commodity combination to be added to a commodity list of a live session comprises:
in response to receiving the target call request from the first user for the target commodity combination, obtaining the first commodity number of commodities in the target commodity combination and identification information of commodities in the target commodity combination;
obtaining the second commodity number of the existing commodities in the commodity list of the live session of the first user and identification information of the existing commodities;
obtaining the third number of commodities in the commodity pool corresponding to the first user; and
determining the to-be-added commodities based on the first commodity number, the identification information of commodities in the target commodity combination, the second commodity number, the identification information of the existing commodities and the third commodity number.

According to one or more embodiments of the present disclosure, Example 8 provides a method of Example 7, the determining the to-be-added commodities based on the first commodity number, the identification information of commodities in the target commodity combination, the second commodity number, the identification information of the existing commodities and the third commodity number comprises:
obtaining a first commodity number upper limit corresponding to the commodity list of the live session and a second commodity number upper limit of the commodity pool corresponding to the first user;
in response to a target sum value of the first and second commodity numbers being less than or equal to the first commodity number upper limit and a specified sum value of the first and third commodity numbers being less than or equal to the second commodity number upper limit, determining target commodities in the target commodity combination except the existing commodities based on the identification information of commodities in the target commodity list and the identification information of the existing commodities; and
determining the to-be-added commodities from the target commodities.

According to one or more embodiments of the present disclosure, Example 9 provides a method of Example 8, further comprising:
in accordance with a determination that the target sum value is larger than the first commodity number upper limit or the specified sum value is larger than the second commodity number upper limit, outputting pre-set upper limit prompt information.

According to one or more embodiments of the present disclosure, Example 10 provides a method of Example 1, further comprising:
obtaining a reason for an addition failure corresponding to a to-be-added commodity failing to be added; and
displaying the reason for the addition failure to the first user.

According to one or more embodiments of the present disclosure, Example 1 provides a method of any of Examples 1-10, the target commodity combination is obtained by:
selecting a plurality of commodities to be combined from the commodity pool corresponding to the first user and/or other commodity pools except the commodity pool corresponding to the first user;
in response to receiving an order specifying command from the first user for the commodities to be combined, ranking the plurality of commodities to be combined to obtain the plurality of commodities to be combined with a specified order; and
packaging the plurality of commodities to be combined with the specified order to obtain the target commodity combination.

According to one or more embodiments of the present disclosure, Example 12 provides a method of Example 11, further comprising:
after packaging the plurality of commodities to be combined with the specified order, generating specified identification information of the target commodity combination corresponding to the plurality of commodities to be combined.

According to one or more embodiments of the present disclosure, Example 13 provides a method of Example 12, further comprising:
sending the specified identification information to a second user, to cause the second user to trigger the call request for the target commodity combination by clicking the specified identification information.

According to one or more embodiments of the present disclosure, Example 14 provides an apparatus for commodity information processing comprising:
a first determination module configured to in response to receiving a target call request from a first user for a target commodity combination, determine to-be-added commodities in the target commodity combination, the to-be-added commodities to be added to a commodity list of a live session, the target commodity combination comprising a commodity in a commodity pool corresponding to the first user and/or a commodity outside the commodity pool corresponding to the first user;
a first obtaining module configured to obtain respective commodity source categories of the to-be-added commodities and a first ranking order of the to-be-added commodities in the target commodity combination, the commodity source categories representing sources of the to-be-added commodities;
a second obtaining module configured to obtain a second ranking order of existing commodities in the commodity list of the live session; and
a first addition module configured to add the to-be-added commodities into the commodity list of the live session based on the commodity source categories and the first and second ranking orders.

According to one or more embodiments of the present disclosure, Example 15 provides a computer readable medium, storing a computer program thereon, wherein when the program is executed by a processing device, implements the method of any of Examples 1-13.

According to one or more embodiments of the present disclosure, Example 16 provides an electronic device, comprising:
a storage device storing a computer program thereon; and
a processing device for executing the computer program in the storage device to implement the method of any of Examples 1-13.

According to the technical solution, by receiving a target call request for a target commodity combination from a first user, adding commodities to be added in the target commodity combination to a commodity list of a live session based on commodity source categories, a first ranking order of the commodities to be added in the target commodity combination, and a second ranking order of existing commodities in a current commodity list of the live session. The addition efficiency of adding a commodity to the live session before livestreaming can be effectively improved, thereby effectively shortening the time consumption of adding a commodity before livestreaming. In addition, the occupation of bandwidth resources and server resources can be reduced to a certain extent, thereby avoiding the reduction of the processing efficiency of the server caused by frequent commodity addition requests and operations.

The foregoing description is merely illustrative of the preferred embodiments of the present disclosure and of the technical principles applied thereto, as will be appreciated by those skilled in the art. The disclosure of the present disclosure is not limited to the technical solution formed by the specific combination of the described technical features. At the same time, it should also cover other technical solutions formed by any combination of the described technical features or equivalent features thereof without departing from the described disclosed concept. For example, the above features and technical features having similar functions disclosed in the present disclosure (but not limited thereto) are replaced with each other to form a technical solution.

In addition, while operations are depicted in a particular order, this should not be understood as requiring that the operations be performed in the particular order shown or in sequential order. Multitasking and parallel processing may be advantageous in certain circumstances. Likewise, while several specific implementation details are included in the above discussion, these should not be construed as limiting the scope of the present disclosure. Certain features that are described in the context of separate embodiments can also be implemented in combination in a single embodiment. Conversely, various features that are described in the context of a single embodiment can also be implemented in multiple embodiments separately or in any suitable sub-combination.

Although the subject matter has been described in language specific to structural features and/or methodological acts, it is to be understood that the subject matter defined in the appended claims is not necessarily limited to the specific features or acts described above. Rather, the specific features and acts described above are merely exemplary forms of implementing the claims.

## Claims

1. A method for commodity information processing, comprising:
in response to receiving a target call request from a first user for a target commodity combination, determining to-be-added commodities in the target commodity combination to be added to a commodity list of a live session, the target commodity combination comprising a commodity in a commodity pool corresponding to the first user and/or a commodity outside the commodity pool corresponding to the first user;
obtaining respective commodity source categories of the to-be-added commodities and a first ranking order of the to-be-added commodities in the target commodity combination, the commodity source categories representing sources of the to-be-added commodities;
obtaining a second ranking order of existing commodities in the commodity list of the live session; and
adding the to-be-added commodities into the commodity list of the live session based on the commodity source categories and the first and second ranking orders.

2. The method of claim 1, wherein the adding the to-be-added commodities into the commodity list of the live session based on the commodity source categories and the first and second ranking orders comprises:
determining respective first order attribute values of the to-be-added commodities based on the first ranking order and the respective commodity source categories of the to-be-added commodities;
determining respective target orders of the to-be-added commodities in the commodity list of the live session based on the respective first order attribute values of the to-be-added commodities and the second ranking order of the existing commodities in the commodity list of the live session; and
adding the to-be-added commodities into the commodity list of the live session based on the respective target orders of the to-be-added commodities in the commodity list of the live session.

3. The method of claim 2, wherein the determining respective first order attribute values of the to-be-added commodities based on the first ranking order and the respective commodity source categories of the to-be-added commodities comprises:
obtaining first time information of a reception of the target call request;
obtaining respective pre-set consuming time durations of the commodity source categories; and
determining, for each of the to-be-added commodities, the respective first order attribute value based on the first time information, the respective pre-set consuming time duration of the to-be-added commodity and a respective position of the to-be-added commodity in the first ranking order.

4. The method of claim 2 or 3, wherein the determining respective target orders of the to-be-added commodities in the commodity list of the live session based on the respective first order attribute values of the to-be-added commodities and the second ranking order of the existing commodities in the commodity list of the live session comprises:
obtaining second order attribute values of the existing commodities in the second ranking order; and
determining respective orders of the to-be-added commodities in the commodity list of the live session based on the first order attribute values of the to-be-added commodities and the second order attribute values of the existing commodities.

5. The method of any of claims 2-4, wherein the adding the to-be-added commodities into the commodity list of the live session based on the respective target orders of the to-be-added commodities in the commodity list of the live session comprises:
sequentially checking respective livestream authority of the first user for the to-be-added commodities based on the respective target orders of the to-be added commodities in the commodity list of the live session; and
in accordance with a determination that the checking of the livestream authority for a to-be-added commodity is passed, adding the to-be-added commodity into the commodity list of the live session.

6. The method of any of claims 2-5, further comprising:
in response to receiving a target adding request from the first user for a specified to-be-added commodity failing to be added, adding the specified to-be-added commodity into the commodity list of the live session based on the first order attribute value of the specified to-be-added commodity.

7. The method of any of claims 1-6, wherein the in response to receiving a target call request from a first user for a target commodity combination, determining to-be-added commodities in the target commodity combination to be added to a commodity list of a live session comprises:
in response to receiving the target call request from the first user for the target commodity combination, obtaining the first commodity number of commodities in the target commodity combination and identification information of commodities in the target commodity combination;
obtaining the second commodity number of the existing commodities in the commodity list of the live session of the first user and identification information of the existing commodities;
obtaining the third number of commodities in the commodity pool corresponding to the first user; and
determining the to-be-added commodities based on the first commodity number, the identification information of commodities in the target commodity combination, the second commodity number, the identification information of the existing commodities and the third commodity number.

8. The method of claim 7, wherein the determining the to-be-added commodities based on the first commodity number, the identification information of commodities in the target commodity combination, the second commodity number, the identification information of the existing commodities and the third commodity number comprises:
obtaining a first commodity number upper limit corresponding to the commodity list of the live session and a second commodity number upper limit of the commodity pool corresponding to the first user;
in response to a target sum value of the first and second commodity numbers being less than or equal to the first commodity number upper limit and a specified sum value of the first and third commodity numbers being less than or equal to the second commodity number upper limit, determining target commodities in the target commodity combination except the existing commodities based on the identification information of commodities in the target commodity list and the identification information of the existing commodities; and
determining the to-be-added commodities from the target commodities.

9. The method of claim 8, further comprising:
in accordance with a determination that the target sum value is larger than the first commodity number upper limit or the specified sum value is larger than the second commodity number upper limit, outputting pre-set upper limit prompt information.

10. The method of any of claims 1-9, further comprising:
obtaining a reason for an addition failure corresponding to a to-be-added commodity failing to be added; and
displaying the reason for the addition failure to the first user.

11. The method of any of claims 1-10, wherein the target commodity combination is obtained by:
selecting a plurality of commodities to be combined from the commodity pool corresponding to the first user and/or other commodity pools except the commodity pool corresponding to the first user;
in response to receiving an order specifying command from the first user for the commodities to be combined, ranking the plurality of commodities to be combined to obtain the plurality of commodities to be combined with a specified order; and
packaging the plurality of commodities to be combined with the specified order to obtain the target commodity combination.

12. The method of claim 11, further comprising:
after packaging the plurality of commodities to be combined with the specified order, generating specified identification information of the target commodity combination corresponding to the plurality of commodities to be combined.

13. The method of claim 12, further comprising:
sending the specified identification information to a second user, to cause the second user to trigger the call request for the target commodity combination by clicking the specified identification information.

14. An apparatus for commodity information processing comprising:
a first determination module configured to in response to receiving a target call request from a first user for a target commodity combination, determine to-be-added commodities in the target commodity combination, the to-be-added commodities to be added to a commodity list of a live session, the target commodity combination comprising a commodity in a commodity pool corresponding to the first user and/or a commodity outside the commodity pool corresponding to the first user;
a first obtaining module configured to obtain respective commodity source categories of the to-be-added commodities and a first ranking order of the to-be-added commodities in the target commodity combination, the commodity source categories representing sources of the to-be-added commodities;
a second obtaining module configured to obtain a second ranking order of existing commodities in the commodity list of the live session; and
a first addition module configured to add the to-be-added commodities into the commodity list of the live session based on the commodity source categories and the first and second ranking orders.

15. A computer readable medium, storing a computer program thereon, wherein when the program is executed by a processing device, implements the method of any of claims 1-13.

16. An electronic device, comprising:
a storage device storing a computer program thereon; and
a processing device for executing the computer program in the storage device to implement the method of any of claims 1-13.

17. A computer program product, comprising a computer program which, when executed by a processing device, implements the method of any of claims 1-13.

18. A computer program, which when executed by a processing device, implements the method of any of claims 1-13.
